(19) Europäisches Patentamt
European Patent Office
Office européen des brevets

(11) **EP 4 378 604 A1**

(12) **EUROPEAN PATENT APPLICATION**
published in accordance with Art. 153(4) EPC

(43) Date of publication:
**05.06.2024 Bulletin 2024/23**

(21) Application number: **22863958.9**

(22) Date of filing: **30.05.2022**

(51) International Patent Classification (IPC):
**B21D 22/00** (2006.01)   **G01N 3/00** (2006.01)
**G01N 3/08** (2006.01)

(52) Cooperative Patent Classification (CPC):
**B21D 22/00; G01N 3/00; G01N 3/08**

(86) International application number:
**PCT/JP2022/021879**

(87) International publication number:
**WO 2023/032370 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.09.2021 JP 2021143634**

(71) Applicant: **JFE Steel Corporation**
**Tokyo 100-0011 (JP)**

(72) Inventors:
• **AGEBA, Ryo**
**Tokyo 100-0011 (JP)**
• **SUMIKAWA, Satoshi**
**Tokyo 100-0011 (JP)**

(74) Representative: **Hoffmann Eitle**
**Patent- und Rechtsanwälte PartmbB**
**Arabellastraße 30**
**81925 München (DE)**

(54) **METHOD FOR PREDICTING TENSION-COMPRESSION REVERSE LOADING BEHAVIOR OF METAL MATERIAL**

(57) In a method of predicting a tension-compression reverse loading behavior of a metal sheet according to the present invention, a tension-compression reverse loading behavior is predicted by determining a model constant of a material model. The method includes a step of acquiring a value of the model constant of a prediction metal sheet by inputting metal materials test data, including a factor related to a uniaxial tension behavior, of the prediction metal sheet to a learned model that has been caused to perform machine learning using, as an input variable, metal materials test data and using, as an output variable, a value of the model constant, which has been determined based on a tension-compression test of the metal sheet, in which the factor related to a uniaxial tension behavior includes point sequence data obtained by discretizing a stress-strain curve of uniaxial tensile test obtained from a uniaxial tensile test.

FIG.1

**Description**

Field

The present invention relates to a method of predicting a tension-compression reverse loading behavior of a metal sheet.

Background

Finite element (FEM) analysis has been utilized to predict a defect of press forming such as fracture, wrinkles, and springback in press forming of an automotive part, and analysis accuracy thereof has a great influence on automotive development. In order to perform highly accurate analysis, it is necessary to set an appropriate analysis condition in consideration of a behavior of a metal sheet.

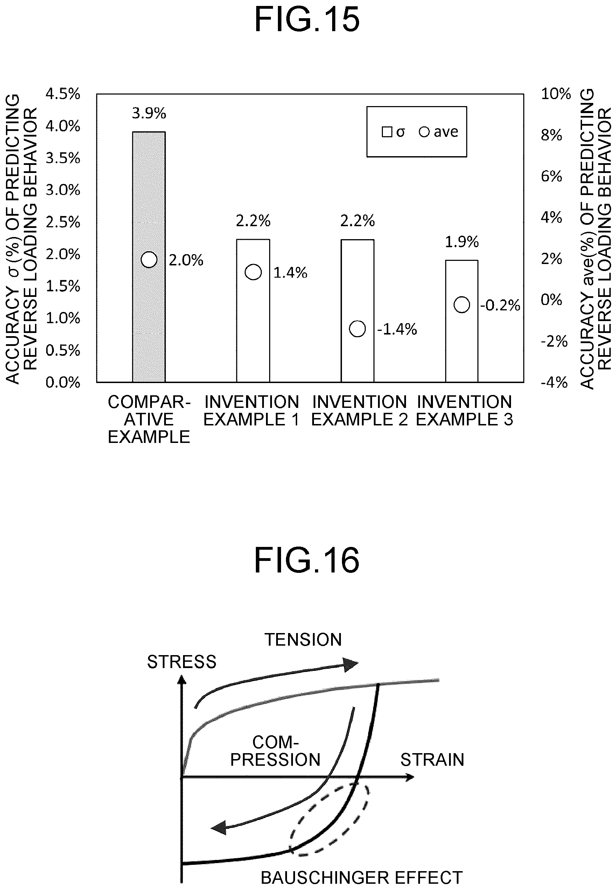

An example of the behavior of a metal sheet that needs to be considered in order to set the appropriate analysis condition will be described with reference to FIG. 16. FIG. 16 illustrates the relation between stress and strain that a metal sheet is subjected to (stress-strain curve (diagram)). A positive direction on a vertical axis represents the magnitude of stress in a tension direction, and a negative direction on the vertical axis represents the magnitude of stress in a compression direction. When a load is applied again to a metal sheet, for which a load has been applied in the tension direction and plastic deformation has been performed, after unloading is performed once, yield stress at the time of reloading is substantially equivalent to stress before unloading. In contrast, when a load direction is reversed after unloading is performed in the initial tension direction and reloading is performed in the compression direction, as illustrated in FIG. 16, yield occurs at stress lower than yield stress in a case where reloading is performed in the tension direction (see broken circle in figure). This phenomenon similarly appears in a case of compression to unloading to tension.

The early yielding phenomenon during reverse loading as described above is called a bauschinger effect, and has an influence on residual stress. Therefore, in order to increase the accuracy of press forming FEM analysis, it is important to consider a behavior in a case where a load applied to a metal sheet is reversed from tension to compression (or compression to tension) (hereinafter, referred to as "tension-compression reverse loading behavior" or simply "tension and compression behavior"). In particular, a high-tensile steel sheet material remarkably exhibits the bauschinger effect, and thus has a large influence on the analysis accuracy.

Many material models (constitutive equations) expressing the bauschinger effect as represented by the Y-U model of Non Patent Literature 1 have been reported so far. In order to express a tension and compression behavior of a metal sheet by using such a material model, it is necessary to appropriately determine a model constant (parameter) included in the material model.

A method, in which a tension-compression applied stress reverse test (hereinafter, simply referred to as "tension-compression test") is performed on a target metal sheet to acquire a stress-strain curve of the metal sheet and a model constant is determined based on the stress-strain curve, is commonly used as a method of determining a model constant of a material model. In a tension-compression test for evaluating the bauschinger effect as described above, however, a material may undergo buckling deformation during compression. In particular, when a test target material has a high material strength and a small sheet thickness, the buckling deformation more easily occurs. Unfortunately, this makes it difficult to conduct a highly accurate test.

Therefore, a tension-compression test using a thin sheet has been examined. Patent Literatures 1 and 2 disclose examples of such test methods. In techniques disclosed in Patent Literatures 1 and 2, strain during a cyclic load test is measured by an extensometer fixed to a side surface portion of a test piece having a specified shape with an elastic body, and the strain during the cyclic load test is measured with high accuracy by using a jig for preventing buckling during compression (buckling prevention jig and buckling prevention based jig).

Citation List

Patent Literature

Patent Literature 1: Japanese Patent No. 5991055
Patent Literature 2: Japanese Patent No. 5991278
Patent Literature 3: Japanese Patent No. 6015997 Non Patent Literature
Non Patent Literature 1: F. Yoshida, T. Uemori: Int. J. Plasticity, 18(2002), 661-686

Summary

Technical Problem

Since a special testing machine is used for a tension-compression test as those disclosed in the above-mentioned Patent Literatures 1 and 2, however, financial and time costs are required to obtain a result. Thus, there has been a demand for determining a model constant of a material model mentioned above based on a result of a simple test instead of the tension-compression test.

The present invention has been made to solve the above-described problem, and an object thereof is to provide a method of predicting a tension-compression reverse loading behavior of a metal sheet capable of predicting a tension-compression reverse loading behavior of a metal sheet by determining a model constant of a material model expressing the tension-compression reverse loading behavior of the metal sheet based on a result of a simple test that does not need a special test method and jig.

Solution to Problem

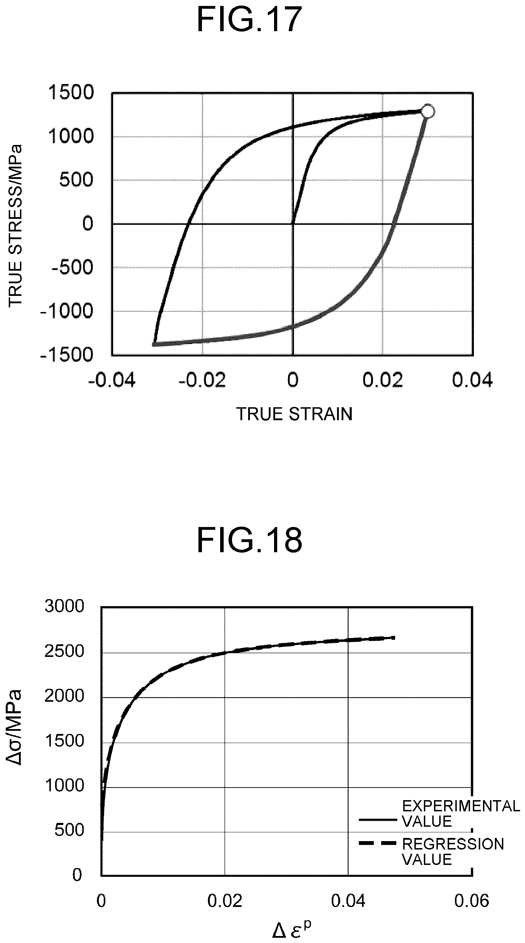

First, how the present invention has been made will be described. FIG. 17 illustrates a cyclic stress-strain curve (diagram) obtained by a tension-compression test performed for a high-tensile steel sheet of 1180 MPa-class in one example of a tension and compression behavior of a metal sheet. A positive direction on a vertical axis in FIG. 17 represents the magnitude of true stress in the tension direction, and a negative direction thereon represents the magnitude of true stress in the compression direction. As illustrated in FIG. 17, in a case where a target material is subjected to tensile deformation to yield, unloading is performed in the tension direction (true stress is decreased to 0), and reloading is performed in the compression direction to perform compressive deformation(see line extending downward from white circle in FIG.17), a point that changes from elastic deformation indicated by a straight line to plastic deformation indicated by a curve in the line extending downward from white circle in FIG.17 is a re-yielding point. A stress change amount and a strain change amount after the re-yielding are denoted by $\Delta\sigma$ and $\Delta\varepsilon$, respectively.

The present inventors have derived Expression (1) below as a material model expressing a compression behavior after re-yielding in a case where compressive deformation causes the re-yielding after yielding due to tensile deformation as described above. Hereinafter, Expression (1) below is referred to as a "compressional behavior model after re-yielding" or simply a "compressional behavior model".

$$\Delta\sigma = Y + A\left(1 - \frac{1}{1 + B\Delta\varepsilon^{p}}\right) \quad \cdots \ (1)$$

Expression (1) above expresses the relation between the stress change amount $\Delta\sigma$ after re-yielding and a plastic strain change amount $\Delta\varepsilon^{p}$ after the re-yielding by using three model constants Y, A, and B. Here, the plastic strain change amount $\Delta\varepsilon^{p}$ is obtained by subtracting an elastic strain change amount $\Delta\varepsilon^{e}$ from a strain change amount $\Delta\varepsilon$. In the three model constants of Expression (1), Y represents re-yielding stress after the reverse of the load direction, A represents convergence stress corresponding to a stress change from the re-yielding stress after the reverse of the load direction, and B represents a degree of the bauschinger effect.

Regression accuracy of Expression (1) above will be described with reference to FIG. 18. A solid line (experimental value) in FIG. 18 is obtained by plotting the relation between the stress change amount ($\Delta\sigma$) and the plastic strain change amount ($\Delta\varepsilon^{p}$) after re-yielding in the tension-compression test result in FIG. 17. A broken line (regression value) is obtained by identifying the model constants Y, A, and B of Expression (1) based on the experimental value in FIG. 18 and plotting the relation between $\Delta\sigma$ and $\Delta\varepsilon^{p}$ using Expression (1) in which the model constants Y, A, and B have been identified. As illustrated in FIG. 18, the solid line indicating the experimental value and the broken line indicating the regression value of Expression (1) substantially coincide with each other. It can be seen that the compressional behavior model of Expression (1) has sufficient regression accuracy with respect to the compression behavior after the re-yielding.

By the way, it is described that "The bauschinger effect is a phenomenon in which anisotropy exists in a work hardening behavior during pre-deformation, and material strength after reverse of the load direction is reduced as compared with that in a case where the load is applied in the same direction. This means that stress acting in such a direction as to prevent a change in the direction during the pre-deformation and assist deformation in the opposite direction (here, referred to as "reverse stress") occurs in the material. Therefore, the bauschinger effect is a phenomenon closely related to work hardening." (The journal of the Iron and Steel Institute of Japan, v70, 1984, no. 11, P. 1551-1558, Present State of Research on the Bauschinger Effect, YAKOU). From this, it is estimated that a behavior at the time when uniaxial tension is applied to a metal sheet and work hardening is performed on the metal sheet has an influence on a behavior of the bauschinger effect at the time when tension-compression reverse loading is performed on the metal sheet.

Examples of an index indicating a behavior in uniaxial tension include representative mechanical property values such as yield stress (YP), maximum tensile stress (TS), and uniform elongation (u-EL). These mechanical property values can be determined from a stress-strain curve obtained as a test result in a case where a uniaxial tensile test is conducted on a metal sheet.

Furthermore, property values representing a work hardening behavior in the uniaxial tension include power of a number n (n value) in the n-th power hardening formula $\sigma = C\varepsilon^n$ at the time when the formula is assumed to be established between true strain in the uniaxial tension and true stress. Note, however, that the n value is known to have a strong correlation with the uniform elongation (u-EL).

Therefore, in order to confirm the relation between the model constants Y, A, and B in the compressional behavior model of Expression (1) mentioned above and the yield stress (YP), the maximum tensile stress (TS), and the uniform elongation (u-EL) mentioned above, the inventors conducted the following experiment.

First, tension-compression tests were conducted on high-strength steel sheets of 590 to 1470 MPa-class, and stress-strain curves (see FIG. 17) were acquired. The model constants Y, A, and B of Expression (1) were identified by regression based the relation between $\Delta\varepsilon^p$ and $\Delta\sigma$ in the acquired stress-strain curves (see FIG. 18).

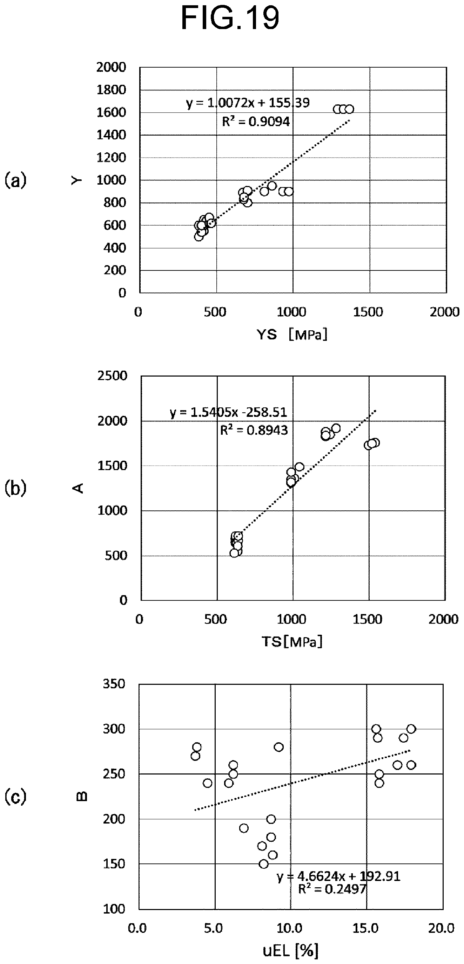

Next, uniaxial tensile tests were conducted on the high-tensile steel sheets, and stress-strain curves of uniaxial tensile test (not illustrated) were acquired. The yield stress (YP), the maximum tensile stress (TS), and the uniform elongation (u-EL) were determined from each acquired stress-strain curve of uniaxial tensile test. Then, the correspondence relation between the model constants Y, A, and B and the mechanical property values YP, TS, and u-EL in the same material was examined. FIG. 19 illustrates the examination result.

FIG. 19(a) illustrates the relation between the model constant Y and the yield stress (YP) in each high-tensile steel sheet. As illustrated in FIG. 19(a), it was found that there is a strong correlation between Y, which is re-yielding stress after reverse of the load direction, and the yield stress (YP). FIG. 19(b) illustrates the relation between the model constant A and the maximum tensile stress (TS) in each high-tensile steel sheet. As illustrated in FIG. 19(b), it was found that there is a strong correlation between A, which is convergence stress after the reverse of the load direction, and the maximum tensile stress (TS). FIG. 19(c) illustrates the relation between the model constant B and the uniform elongation (u-EL) in each high-tensile steel sheet. As illustrated in FIG. 19(c), a certain correlation was observed between B, which defines the degree of the bauschinger effect, and the uniform elongation (u-EL) although the correlation is not strong.

From the above, the inventors have considered that a model constant of a material model expressing the bauschinger effect can be formulated by a regression model or the like based on the relation with representative mechanical property values such as YS, TS, and u-EL obtained from the uniaxial tensile tests, instead of identifying the model constant from a cyclic stress-strain curve obtained from the tension-compression tests.

However, materials with different strengthening mechanism of a high-strength steel sheet (high-tensile steel sheet), such as a structure-hardened high-tensile steel sheet (dual-phase (DP) steel) and a precipitation-hardened high strength low alloy steel (HSLA steel), differ in a behavior of deformation (work hardening) of a material in uniaxial tension due to a difference in microstructure even in the same maximum tensile stress (TS grade). The DP steel is made by a dual-phase structure in which different materials, for example, a soft ferrite phase and a hard martensite phase coexist. The HSLA steel is made by adding a trace of alloy elements such as Nb, V, and Ti. Therefore, representative mechanical property values such as YS, TS, and u-EL, which are points on a stress-strain curve obtained from a uniaxial tensile test cannot express the difference in a behavior as described above. Thus, sufficient regression accuracy has failed to be obtained by a regression model in which a mechanical property value is used as an explanatory variable and a model constant is used as an objective variable.

Furthermore, even in a steel grade having the same maximum tensile stress and the same strengthening mechanism, a behavior of work hardening changes due to a change in microstructure caused by variations of manufacturing conditions (e.g., hot-rolling condition and annealing condition). Thus, the regression model, which uses only a representative mechanical property value as an explanatory variable, has a problem in terms of estimation accuracy.

Therefore, the inventors have considered that the problem as described above can be solved and a model constant can be accurately derived if point sequence data (true strain and true stress) obtained by discretizing a stress-strain curve of uniaxial tensile test itself of a uniaxial tensile test including information on representative mechanical property values obtained from the stress-strain curve of uniaxial tensile test of the uniaxial tensile test and information on a behavior of work hardening closely related to the bauschinger effect can be used as an explanatory variable instead of the representative mechanical property values. Then, the present inventors have conceived use of a neural network (NN) without limitation in selection of an input variable in order to handle the point sequence data as an input variable (explanatory variable). The present invention has been made through the circumstances as described above, and specifically has the following configuration.

A method of predicting a tension-compression reverse loading behavior of a metal sheet according to the present invention, the tension-compression reverse loading behavior being predicted by determining a model constant of a material model expressing the tension-compression reverse loading behavior of the metal sheet, includes a step of acquiring a value of the model constant of a prediction metal sheet by inputting metal materials test data, including a factor related to a uniaxial tension behavior, of the prediction metal sheet to a learned model that has been caused to perform machine learning using, as an input variable, metal materials test data and using, as an output variable, a value of the model constant, which has been determined based on a tension-compression test of the metal sheet, wherein the factor related to a uniaxial tension behavior includes point sequence data obtained by discretizing a stress-strain curve of uniaxial tensile test obtained from a uniaxial tensile test.

The factor related to a uniaxial tension behavior may further include a set of mechanical property values including yield stress, maximum tensile stress, and uniform elongation.

The metal materials test data may further include steel grade information.

A compressional behavior model of a steel material expressed in Expression (1) below may be used as the material model, and each of Y, A, and B in Expression (1) below may be used as the model constant.

$$\Delta\sigma = Y + A\left(1 - \frac{1}{1 + B\Delta\varepsilon^{p}}\right) \quad \cdot\cdot\cdot \quad (1)$$

where $\Delta\sigma$ represents a stress change amount after re-yielding, and
$\Delta\varepsilon^{p}$ represents a plastic strain change amount after the re-yielding.

Advantageous Effects of Invention

The present invention includes a step of acquiring a model constant of a prediction metal sheet by inputting metal materials test data, including a factor related to a uniaxial tension behavior, of the prediction metal sheet to a learned model that has been caused to perform machine learning using, as an input variable, metal materials test data and using, as an output variable, a value of the model constant, which has been determined based on a tension-compression test of the metal sheet. The factor related to a uniaxial tension behavior includes point sequence data obtained by discretizing a stress-strain curve of uniaxial tensile test obtained from a uniaxial tensile test. Thus, a value of the model constant of the material model expressing the tension-compression reverse loading behavior of the metal sheet can be determined based on a result of a simple uniaxial tensile test. Then, the tension-compression reverse loading behavior of the metal sheet can be predicted by substituting the determined value into the material model without conducting a tension-compression test that requires a special testing machine.

Brief Description of Drawings

FIG. 1 is an explanatory diagram of a method of predicting a tension-compression reverse loading behavior of a metal sheet according to a first embodiment of the present invention.
FIG. 2 is a flowchart illustrating each step for performing (i) Learning phase in FIG. 1.
FIG. 3 illustrates a stress-strain curve of uniaxial tensile test obtained from a uniaxial tensile test and point sequence data obtained by discretizing the stress-strain curve of uniaxial tensile test.
FIG. 4 is a schematic diagram illustrating a configuration of a learned model (neural network) in FIG. 1.
FIG. 5 is a flowchart illustrating each step for performing (ii) Recognition phase in FIG. 1.
FIG. 6 is an explanatory diagram of a method of predicting a tension-compression reverse loading behavior of a metal sheet according to a second embodiment of the present invention.
FIG. 7 is a schematic diagram illustrating a configuration of a learned model (neural network) in FIG. 6.
FIG. 8 is an explanatory diagram of a method of predicting a tension-compression reverse loading behavior of a metal sheet according to a third embodiment of the present invention.
FIG. 9 is a schematic diagram illustrating a configuration of a learned model (neural network) in FIG. 8.
FIG. 10 is a graph illustrating learning accuracies of learned models of invention examples in an example.
FIG. 11 is a graph illustrating prediction accuracies of a comparative example in the example.
FIG. 12 is a graph illustrating prediction accuracy of an invention example 1 in the example.
FIG. 13 is a graph illustrating prediction accuracy of an invention example 2 in the example.
FIG. 14 is a graph illustrating prediction accuracy of an invention example 3 in the example.
FIG. 15 is a graph in which the prediction accuracy of the comparative example and the prediction accuracies of the invention examples 1 to 3 in the example are compared.

FIG. 16 is an explanatory diagram of a bauschinger effect.

FIG. 17 is one example of a cyclic stress-strain curve obtained by a tension-compression test.

FIG. 18 is a graph illustrating regression accuracy in a case where regression is performed by using a compressional behavior model of Expression (1) with respect to a compression behavior after re-yielding in FIG. 17.

FIG. 19 is a graph illustrating the correlation between model constants Y, A, and B of the compressional behavior model of Expression (1) and mechanical property values YP, TS, and u-EL obtained from a uniaxial tensile test.

Description of Embodiments

[First Embodiment]

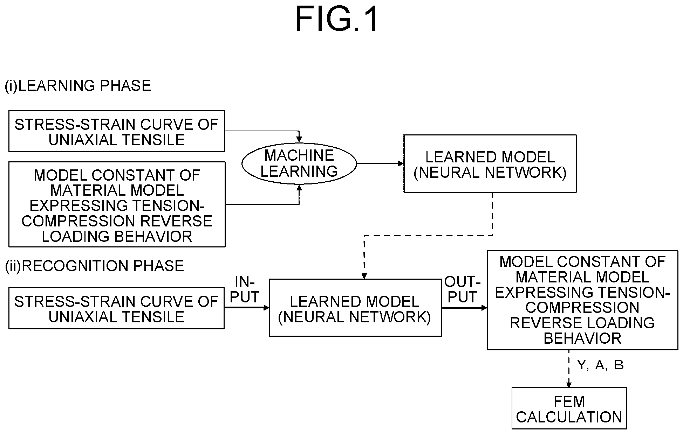

In methods of predicting a tension-compression reverse loading behavior of a metal sheet according to embodiments of the present invention, the tension-compression reverse loading behavior is predicted by determining a model constant of a material model expressing the tension-compression reverse loading behavior of the metal sheet. As illustrated in FIG. 1, the embodiments include a learning phase and a recognition phase. In the learning phase, a neural network is caused to perform machine learning. In the recognition phase, the tension-compression reverse loading behavior of the metal sheet is predicted by using the neural network that has performed learning in the learning phase. Each phase of a first embodiment of the present invention will be specifically described below.

<Learning Phase>

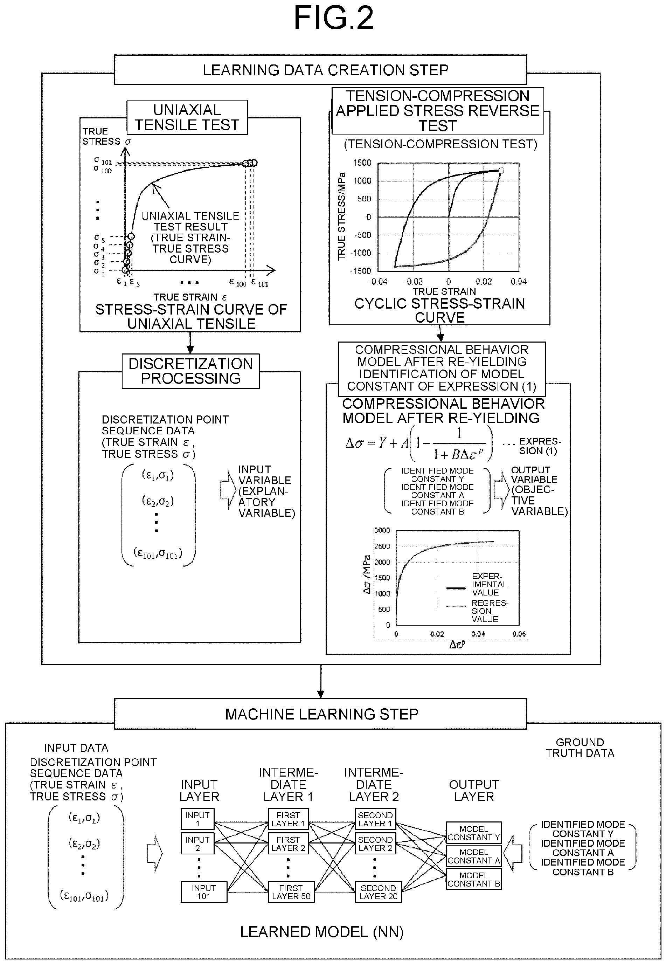

As illustrated in FIG. 2, the learning phase includes a learning data creation step and a machine learning step. In the learning data creation step, learning data to be used for machine learning of the neural network is created. In the machine learning step, a learned model is constructed by causing the neural network to perform machine learning by using the learning data created in the learning data creation step.

<<Learning Data Creation Step>>

The learning data creation step is a step of creating input data and ground truth data (also referred to as labeled training data) to be used for machine learning of the neural network. In the learning data creation step, the input data is created based on results of uniaxial tensile tests of various metal sheets, and the ground truth data is created based on results of tension-compression tests of the same metal sheets. Details are as follows.

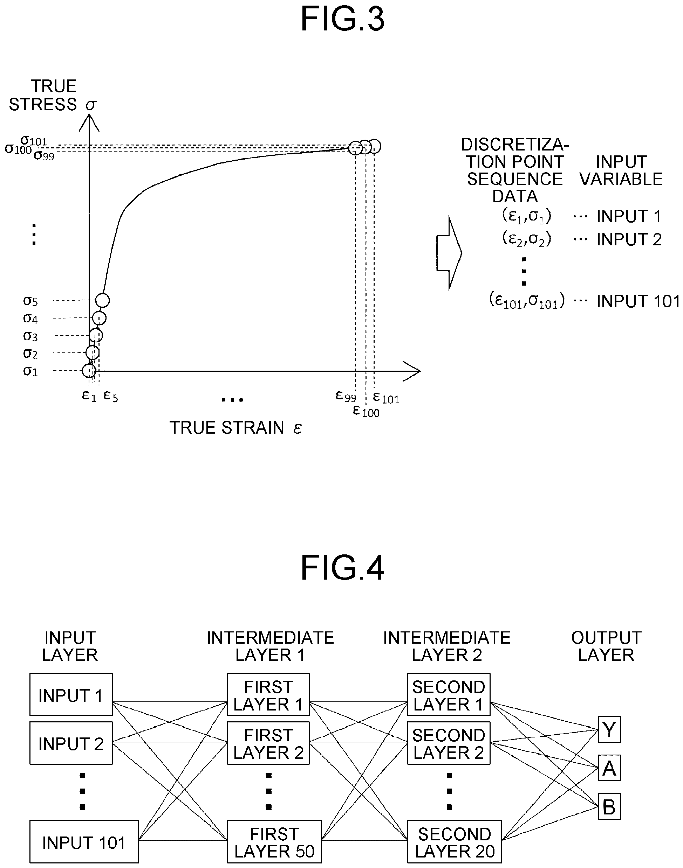

In creating the input data, first, the uniaxial tensile tests are performed on a plurality of metal sheets, and stress-strain curves of uniaxial tensile test (see FIG. 3) indicating uniaxial tension behaviors of the targets are acquired. Note that the acquired stress-strain curves of uniaxial tensile test fall within a range indicating uniform elongation until localized necking occurs in test pieces in the uniaxial tensile tests.

Next, discretization processing is performed on the stress-strain curves of uniaxial tensile test obtained by the above-described uniaxial tensile tests. The discretization processing is a process of discretizing a stress-strain curve of uniaxial tensile test into a predetermined sections N and converting the discretized curve into (N + 1) pieces of point sequence data. This point will be specifically described with reference to FIG. 3.

FIG. 3 illustrates an example in which a stress-strain curve of uniaxial tensile test is discretized into 100 sections. Coordinates (true strain $\varepsilon$ and true stress $\sigma$) of boundary points between respective sections, a start point, and an end point are acquired from the discretized stress-strain curve of uniaxial tensile test, and point sequence data including 101 pieces of coordinate data $(\varepsilon_1, \sigma_1)$ to $(\varepsilon_{101}, \sigma_{101})$ is generated. The 101 pieces of coordinate data (point sequence data) are to be used as the input data used for machine learning of the neural network. Note that the start point coordinates $(\varepsilon_1, \sigma_1)$ of the point sequence data is defined as input 1 of an input variable, and coordinate data $(\varepsilon_2, \sigma_2)$ adjacent to $(\varepsilon_1, \sigma_1)$ is defined as input 2. The respective pieces of coordinate data sequentially correspond to inputs 1 to 101 of input variables below up to the end point $(\varepsilon_{101}, \sigma_{101})$.

In creating the ground truth data, the tension-compression tests are performed on various metal sheets used for creating the above-described input data, and cyclic stress-strain curves (see FIG. 17) indicating tension and compression behaviors of the sheets are acquired.

Then, a model constant of a material model expressing a tension and compression behavior is identified based on the cyclic stress-strain curves obtained by the above-described tension-compression tests. Note that, in the embodiment, the above-mentioned compressional behavior model of Expression (1) is used as the material model. Regression is performed by using the compressional behavior model with respect to the cyclic stress-strain curves of the respective metal sheets. Values of model constants Y, A, and B identified as a result are defined as the ground truth data to be used for machine learning of the neural network.

<<Machine Learning Step>>

The machine learning step is a step of causing the neural network to perform machine learning by using the input data and the ground truth data created in the learning data creation step and constructing a learned model. The learned model constructed in the machine learning step will be described with reference to FIG. 4.

FIG. 4 is a schematic diagram illustrating a configuration of the learned model. As illustrated in FIG. 4, the learned model includes an input layer, one or more intermediate layers (hidden layers), and an output layer. Each layer is an affine layer, and outputs of the intermediate layers have an appropriate activation function such as a sigmoid function and a ReLu function.

In the machine learning step, a set of the input data (point sequence data $(\varepsilon_1, \sigma_1)$ to $(\varepsilon_{101}, \sigma_{101})$) and the ground truth data (values of model constants Y, A, and B) of the same metal sheet created in the learning data creation step is given to the input layer and the output layer, and machine learning is performed. The learned model in FIG. 4 is constructed.

<Recognition Phase>

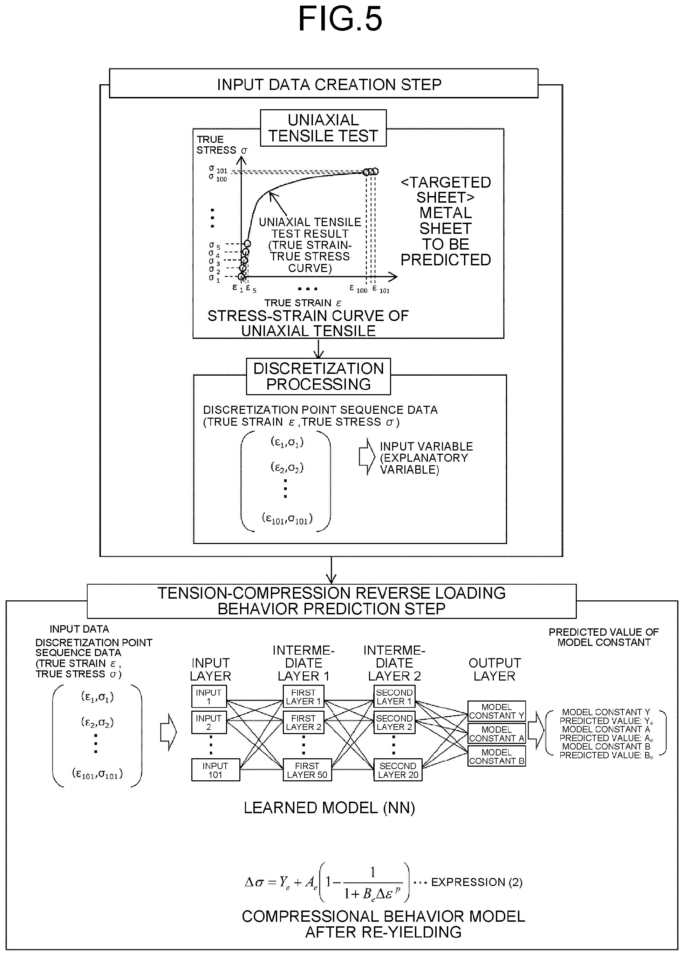

As illustrated in FIG. 5, the recognition phase includes an input data creation step and a tension-compression reverse loading behavior prediction step. In the input data creation step, input data to be input to the learned model is created based on a result of a uniaxial tensile test on a prediction metal sheet. In the tension-compression reverse loading behavior prediction step, a tension-compression reverse loading behavior of the metal sheet is predicted based on the input data created in the input data creation step.

<<Input Data Creation Step>>

The input data creation step is a step of creating input data to be input to the learned model based on a result of a uniaxial tensile test on a prediction metal sheet. The input data is created in the step as in the case where the input data to be used for machine learning is created in the learning data creation step of the learning phase. Specifically, a uniaxial tensile test is performed on a prediction metal sheet, and a stress-strain curve of uniaxial tensile test indicating a uniaxial tension behavior is acquired. Then, discretization processing is performed on the obtained stress-strain curve of uniaxial tensile test to generate the point sequence data $(\varepsilon_1, \sigma_1)$ to $(\varepsilon_{101}, \sigma_{101})$(see FIG. 3) .

<<Tension-Compression Reverse Loading Behavior Prediction Step>>

The tension-compression reverse loading behavior prediction step is a step of predicting a tension-compression reverse loading behavior by inputting the input data created in the input data creation step to the learned model, acquiring a predicted value of a model constant output by the learned model based on the input, and substituting the predicted value into a compressional behavior model.

First, a predicted value $Y_e$ of a model constant Y, a predicted value $A_e$ of a model constant A, and a predicted value $B_e$ of a model constant B are acquired as outputs of the learned model by inputting the point sequence data $(\varepsilon_1, \sigma_1)$ to $(\varepsilon_{101}, \sigma_{101})$indicating a uniaxial tension behavior of the prediction metal sheet to the learned model (see FIG. 4).

The acquired predicted values $Y_e$, $A_e$, and $B_e$ are substituted into the model constants Y, A, and B of the above-mentioned compressional behavior model of Expression (1) (see Expression (2) below). A compression behavior after re-yielding of the prediction metal sheet can be predicted from Expression (2) below.

$$\Delta\sigma = Y_e + A_e\left(1 - \frac{1}{1 + B_e\Delta\varepsilon^p}\right) \quad \cdot \cdot \cdot \ (2)$$

where $\Delta\sigma$ is a stress change amount after re-yielding, and

$\Delta\varepsilon^p$ is a plastic strain change amount after the re-yielding.

As described above, according to the embodiment, the tension-compression reverse loading behavior (compression behavior after re-yielding in example) can be predicted by determining a model constant of a material model (compressional behavior model after re-yielding in example) by using a learned model based on a result of a uniaxial tensile test on a prediction metal sheet without performing a tension-compression test on the prediction metal sheet. Furthermore, when the relational expression of Expression (2) above is set in FEM analysis, press forming FEM analysis can be performed in consideration of the tension-compression reverse loading behavior of the metal sheet.

[Second Embodiment]

The present invention makes it possible to predict a tension-compression reverse loading behavior from a uniaxial tension behavior of a prediction metal sheet by causing a neural network to perform machine learning of the relation between a factor related to a uniaxial tension behavior of a metal sheet and a factor (model constant of material model) related to a tension and compression behavior. Then, in the above-mentioned first embodiment, the point sequence data obtained by discretizing a stress-strain curve of uniaxial tensile test is used as the factor related to a uniaxial tension behavior. In the second embodiment, an example will be described in which accuracy of predicting a tension-compression reverse loading behavior is further enhanced by further using a mechanical property value of the prediction metal sheet as the factor related to a uniaxial tension behavior.

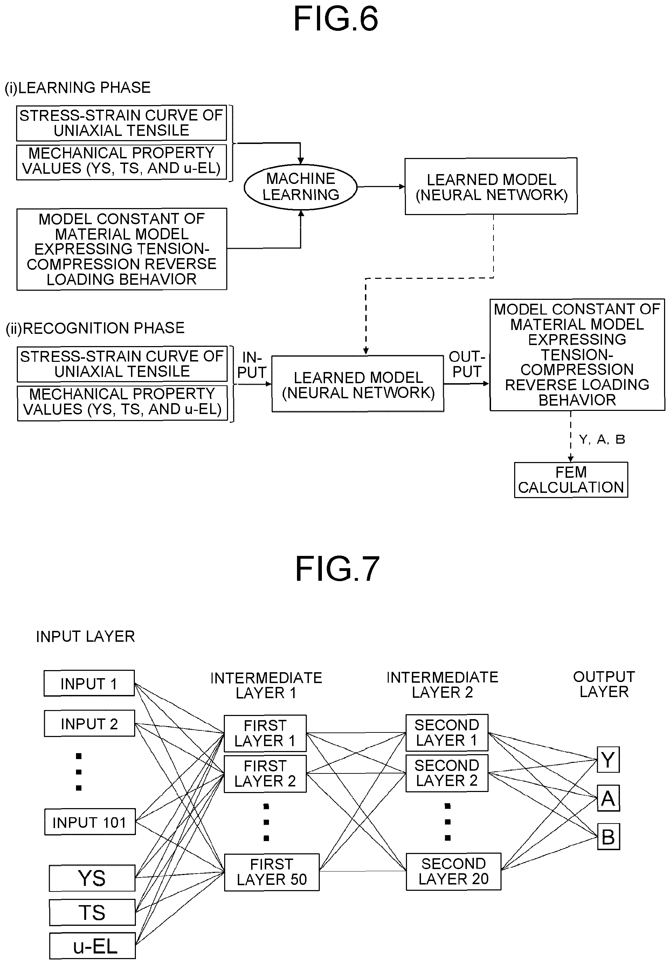

As illustrated in FIG. 6, a method of predicting a tension-compression reverse loading behavior of a metal sheet according to a second embodiment includes a learning phase and a recognition phase similar to those in the first embodiment. A difference from the first embodiment is that input data in the learning phase and the recognition phase includes a set of mechanical property values, which are factors related to the uniaxial tension behavior of the metal sheet. This point will be specifically described below.

In the learning phase of the second embodiment, point sequence data obtained by discretizing a stress-strain curve of uniaxial tensile test as in the first embodiment is created in the learning data creation step (see FIG. 3). In this case, mechanical property values are also acquired from the stress-strain curve of uniaxial tensile test. Here, the mechanical property values include yield stress (YP), maximum tensile stress (TS), and uniform elongation (u-EL) as mentioned above.

Then, in the machine learning step, the machine learning of the neural network is performed by using, as input data, the point sequence data obtained by discretizing a stress-strain curve of uniaxial tensile test obtained from a uniaxial tensile test and the set of mechanical property values (YP, TS, and u-EL) and using, as ground truth data, the values of the model constants Y, A, and B identified based on a cyclic stress-strain curve obtained from a tension-compression test. FIG. 7 illustrates an example of a learned model constructed by the above-described machine learning.

In the input data creation step of the recognition phase, as in the learning data creation step, mechanical property values are further acquired in addition to the point sequence data from the stress-strain curve of uniaxial tensile test. Then, in the tension-compression reverse loading behavior prediction step, the predicted values $Y_e$, $A_e$, and $B_e$ of the model constants Y, A, and B can be acquired by inputting the point sequence data (inputs 1 to 101) and the set of the mechanical property values (YP, TS, and u-EL) based on the uniaxial tension behavior of the prediction metal sheet in the learned model in FIG. 7.

According to the embodiment, a mechanical property value of a metal sheet is further included as a factor related to a uniaxial tension behavior, so that further improvement of the accuracy of predicting a tension-compression reverse loading behavior can be expected.

[Third Embodiment]

As described in the first embodiment, a tension-compression reverse loading behavior can be accurately predicted by using point sequence data obtained by discretizing a stress-strain curve of uniaxial tensile test as input data in the learning phase and the recognition phase. Furthermore, as described in the second embodiment, improvement of prediction accuracy can be expected by adding a mechanical property value, which is a factor related to a uniaxial tension behavior, to the above-described input data. Moreover, in addition to the factor related to a uniaxial tension behavior, the input data may include test data related to a uniaxial tensile test (e.g., steel grade information). Such an example will be described below.

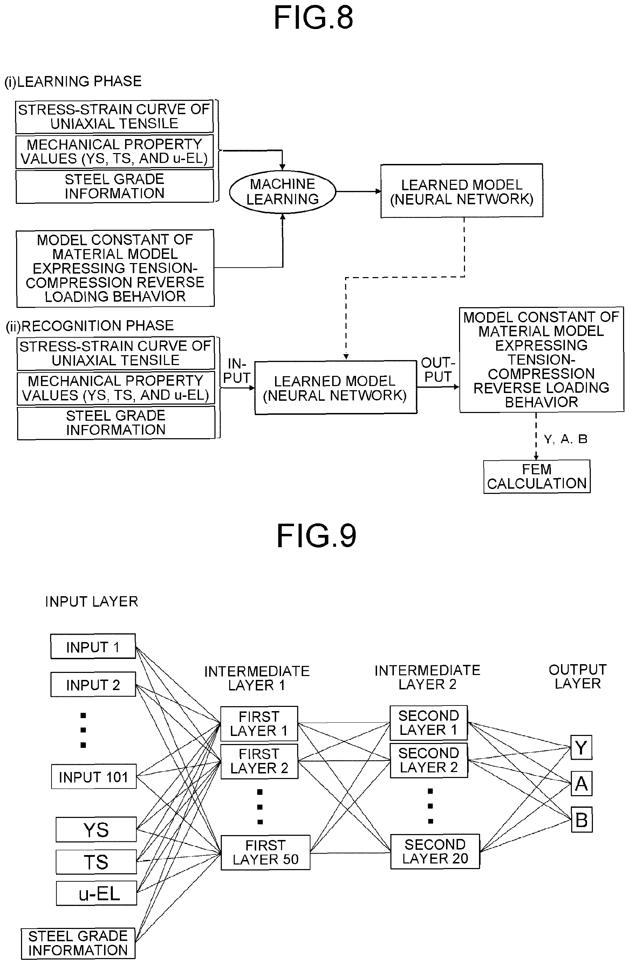

As illustrated in FIG. 8, a method of predicting a tension-compression reverse loading behavior of a metal sheet according to a third embodiment includes a learning phase and a recognition phase similar to those in the first and second embodiments. A difference from the first and second embodiments is that input data in the learning phase and the recognition phase includes steel grade information on the metal sheet. This point will be specifically described below.

In the learning phase of the third embodiment, in addition to the point sequence data obtained by discretizing a stress-strain curve of uniaxial tensile test described in the first embodiment and the set of mechanical property values (YP, TS, and u-EL) described in the second embodiment, the steel grade information is used as input data to be used for machine learning of the neural network.

Here, the steel grade information indicates a steel grade of a metal sheet used in a uniaxial tensile test. For example, a character string obtained by combining a TS grade (590 to 1470 MPa-class) representing maximum tensile stress with an abbreviation (e.g., DP, HSLA, and FM) representing a strengthening mechanism can be used. In this case, character strings of "980DP" and "590HSLA" are used as the steel grade information for DP steel of 980 MPa-class and HSLA steel of 590 MPa-class, respectively.

FIG. 9 illustrates an example of a learned model constructed by performing machine learning of the neural network, in which the point sequence data obtained by discretizing a stress-strain curve of uniaxial tensile test obtained from a uniaxial tensile test, the set of mechanical property values (YP, TS, and u-EL), and the steel grade information are used as input data, and the values of the model constants Y, A, and B identified based on a cyclic stress-strain curve obtained from a tension-compression test are used as ground truth data.

The predicted values of the model constants Y, A, and B can be acquired by inputting, to the learned model in FIG. 9, the point sequence data (inputs 1 to 101) and the set of mechanical property values (YP, TS, and u-EL) based on the uniaxial tension behavior of the prediction metal sheet and the steel grade information.

According to the third embodiment, the input data further includes the steel grade information in addition to the factor related to a uniaxial tension behavior, so that further improvement of the accuracy of predicting a tension-compression reverse loading behavior can be expected. Note that, although the input data includes the set of mechanical property values (YP, TS, and u-EL) in the above-described example, only the point sequence data and the steel grade information may be used as the input data.

Although, in the above-described first to third embodiments, the compressional behavior model of Expression (1) is used as the material model expressing a tension-compression reverse loading behavior of a metal sheet, the material model is not limited in the present invention. It goes without saying that a material model other than the above-described one can be used. A model constant in the material model may be set as a determination target.

Examples of the material model include a conventionally known kinematic hardening model. More specifically, a Y-U model described in Non Patent Literature 1, which is one example of the kinematic hardening model, can be mentioned. In this case, seven parameters of Y, C, B, Rsat, b, m, and h in Non Patent Literature 1 can be used as model constants of the present invention.

An elastoplastic constitutive equation used in "STRESS-STRAIN RELATIONSHIP SIMULATION METHOD" disclosed in Japanese Patent No. 5582211, which is obtained by improving the Y-U model, can be mentioned as another example of the material model. Also in this case, parameters of the equation, specifically, 10 parameters of Y, Rsat, b, m, h, Cc, A1, A2, n1, and n2 can be used as model constants of the present invention.

[Example]

An experiment for confirming the accuracy of predicting a tension-compression reverse loading behavior in the present invention was conducted. The result will be described below.

In an example, in order to create learning data to be used for machine learning, 29 types of learning high-tensile steel sheets having different TS grades and strengthening mechanisms were prepared. The learning high-tensile steel sheets include those having a TS grade of 590 to 1470 MPa-class. The learning high-tensile steel sheets include strengthening mechanisms of DP steel, HSLA steel, and ferrite-martensite (FM) steel. Then, three types of prediction high-tensile steel sheets of 980 MPa-class, 1180 MPa-class, and 1470 MPa-class, which were not included in the above-described 29 samples, were prepared as targets for predicting a tension-compression reverse loading behavior.

A uniaxial tensile test was performed for each of the above-mentioned learning high-tensile steel sheets, and point sequence data obtained by discretizing an obtained stress-strain curve of uniaxial tensile test was created (see first embodiment). Furthermore, the yield stress (YP), the maximum tensile stress (TS), and the uniform elongation (u-EL), which were mechanical property values obtained from the uniaxial tensile test, were determined for each learning high-tensile steel sheet (see second embodiment). Moreover, steel grade information indicating a steel grade of each learning high-tensile steel sheet was created (see third embodiment). Then, a tension-compression test was performed for each learning high-tensile steel sheet. The compressional behavior model of Expression (1) was identified by using a least square method for the obtained cyclic stress-strain curve. Values of the model constants Y, A, and B were determined.

[Invention Example 1]

The neural network was caused to perform machine learning by using, as input data, point sequence data in each learning high-tensile steel sheet and using, as ground truth data, the identified values of the model constants Y, A, and B. A learned model as illustrated in FIG. 4 was constructed. Then, the predicted values $Y_e$, $A_e$, and $B_e$ of the model constants of the prediction high-tensile steel sheets were acquired in the method of the first embodiment by using the learned model.

[Invention Example 2]

The neural network was caused to perform machine learning by using, as input data, point sequence data and mechanical property values in each learning high-tensile steel sheet and using, as ground truth data, the identified values of the model constants Y, A, and B. A learned model as illustrated in FIG. 7 was constructed. Then, the predicted values

$Y_e$, $A_e$, and $B_e$ of the model constants of the prediction high-tensile steel sheets were acquired in the method of the second embodiment by using the learned model.

[Invention Example 3]

The neural network was caused to perform machine learning by using, as input data, point sequence data, mechanical property values, and steel grade information in each learning high-tensile steel sheet and using, as ground truth data, the identified values of the model constants Y, A, and B. A learned model as illustrated in FIG. 9 was constructed. Then, the predicted values $Y_e$, $A_e$, and $B_e$ of the model constants of the prediction high-tensile steel sheets were acquired in the method of the third embodiment by using the learned model.

[Comparative Example]

A regression model using the mechanical property values (YP, TS, and u-EL) as explanatory variables and using the model constants Y, A, and B as objective variables was created based on the mechanical property values (YP, TS, and u-EL) obtained from a uniaxial tensile test in each learning high-tensile steel sheet and the identified values of the model constants Y, A, and B. Then, the predicted values $Y_e$, $A_e$, and $B_e$ of the model constants of the prediction high-tensile steel sheets were determined by using the regression model.

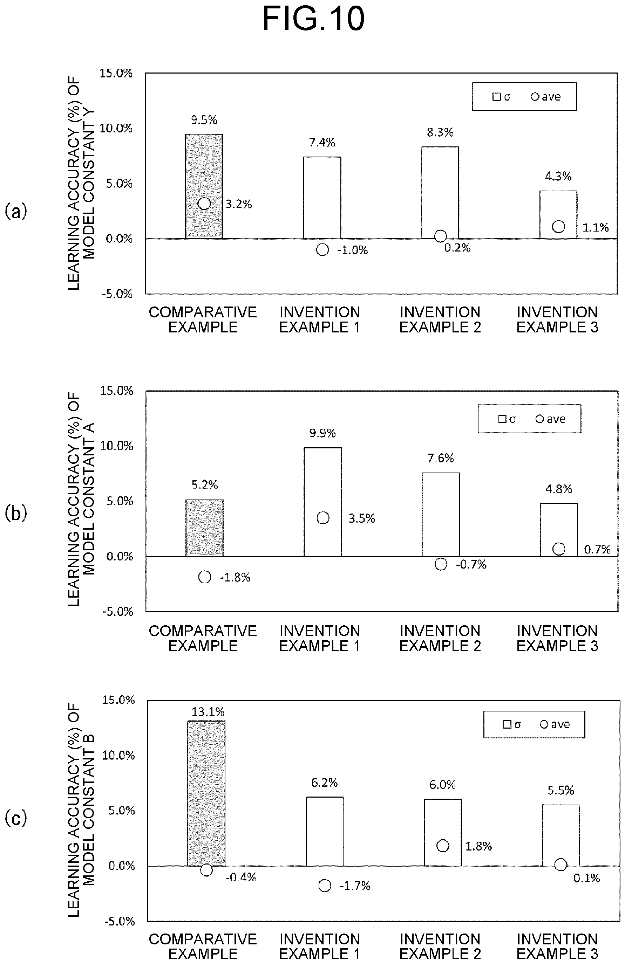

Learning accuracies of the learned models of the invention examples 1 to 3 and a regression accuracy of the regression model of the comparative example have been confirmed. The learning accuracies and the regression accuracy will first be described before describing prediction accuracies of the invention examples 1 to 3 and the comparative example described above. In order to confirm the learning accuracies of the learned models of the invention examples 1 to 3, input data of the learning data was input again to the learned models of the invention examples 1 to 3, and the predicted values $Y_e$, $A_e$, and $B_e$ of the model constants output by the learned models based on the input were compared with the ground truth data of the learning data. Similarly, the predicted values $Y_e$, $A_e$, and $B_e$ were determined by substituting the mechanical property values (YP, TS, and u-EL) of a learning high-tensile steel sheet into the regression model of the comparative example, and compared with the ground truth data of the learning data. FIG. 10 illustrates a result of examining the learning accuracies (regression accuracy in comparative example) by the above-described method.

FIG. 10(a) is a graph illustrating learning accuracies (regression accuracy in comparative example) related to the model constant Y. Average values (ave) and standard deviation scores ($\sigma$) of prediction accuracies in all learning high-tensile steel sheets are illustrated as values indicating the learning accuracies based on the difference between the predicted values $Y_e$ in the invention examples 1 to 3 and the comparative example and a value of Y used as the ground truth data of the machine learning. Note that the prediction accuracy was calculated by dividing the difference between the value of Y of the ground truth data and the predicted value $Y_e$ by the value of Y of the ground truth data, multiplying the result by 100, and expressing the multiplied result in a percent value.

Similarly, FIG. 10(b) is a graph illustrating learning accuracies (regression accuracy in comparative example) related to the model constant A. FIG. 10(c) is a graph illustrating learning accuracies (regression accuracy in comparative example) related to the model constant B.

In FIG. 10(a), all the average values (ave) and standard deviation scores ($\sigma$) of prediction accuracy in the invention examples 1 to 3 are smaller than those in the comparative example. This indicates that the learning accuracies related to the model constant Y in the learned models of the invention examples 1 to 3 are slightly higher than the regression accuracy of the comparative example. Furthermore, as illustrated in FIG. 10(b), no significant advantage was observed in the learning accuracies of the model constant A in the invention examples 1 to 3 even when the learning accuracies were compared with the regression accuracy of the comparative example. This is considered to be because, as mentioned above, the model constants Y and A have a strong correlation with the mechanical property values YP and TS, and the comparative example using the regression model based on the mechanical property values also had sufficient regression accuracy.

In constant, in the learning accuracies of the model constant B illustrated in FIG. 10(c), a standard deviation score ($\sigma$) of prediction accuracy is greatly reduced as compared with that in the comparative example. This indicates that the learning accuracies related to the model constant B of the invention examples 1 to 3 are greatly improved as compared with the regression accuracy of the comparative example. The learning accuracies were improved by approximately 55% on average.

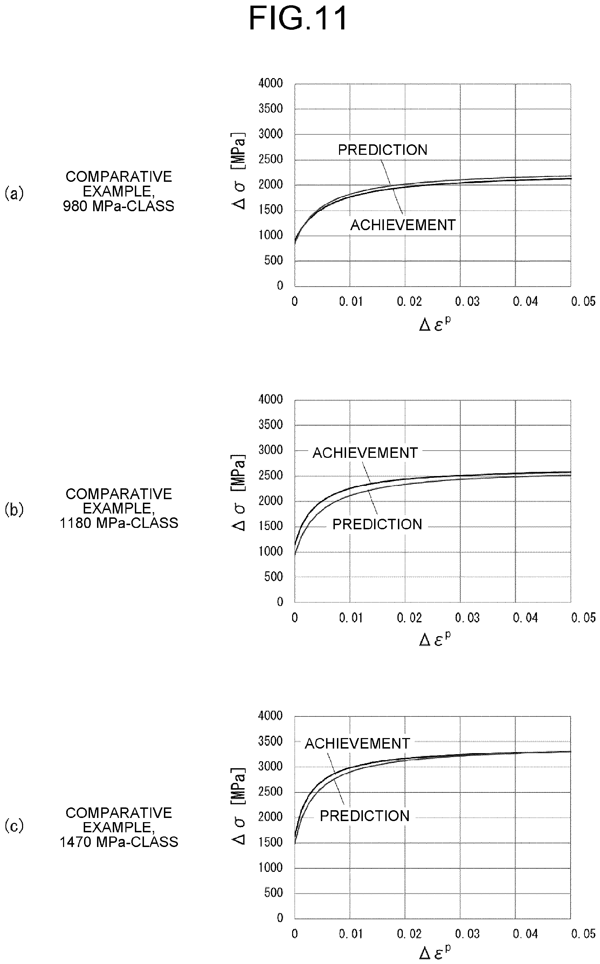

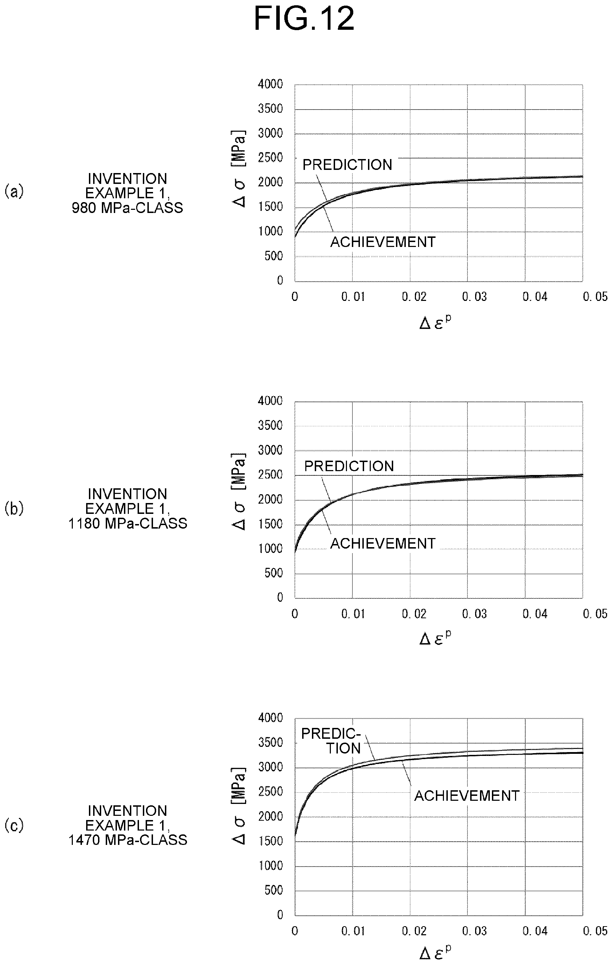

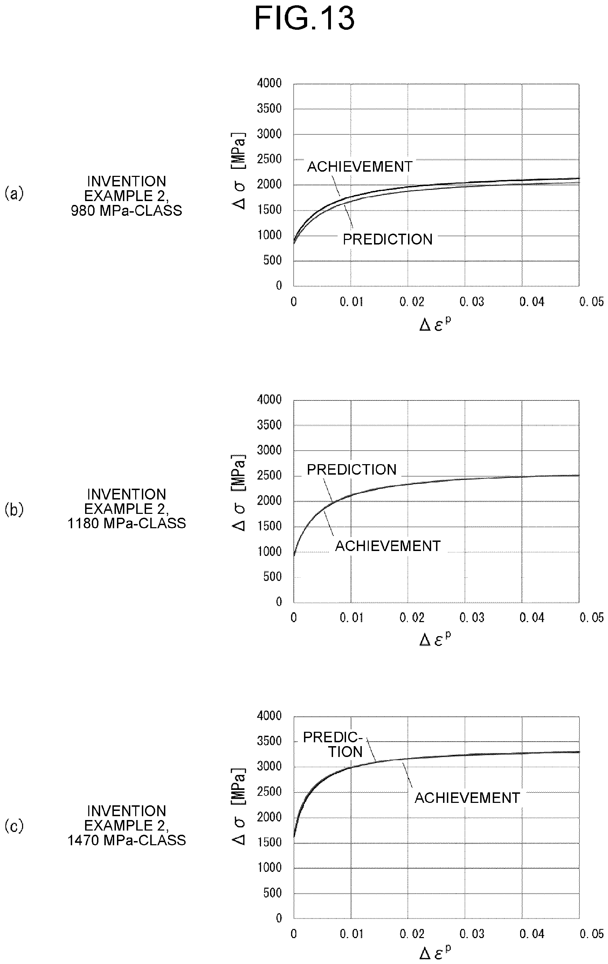

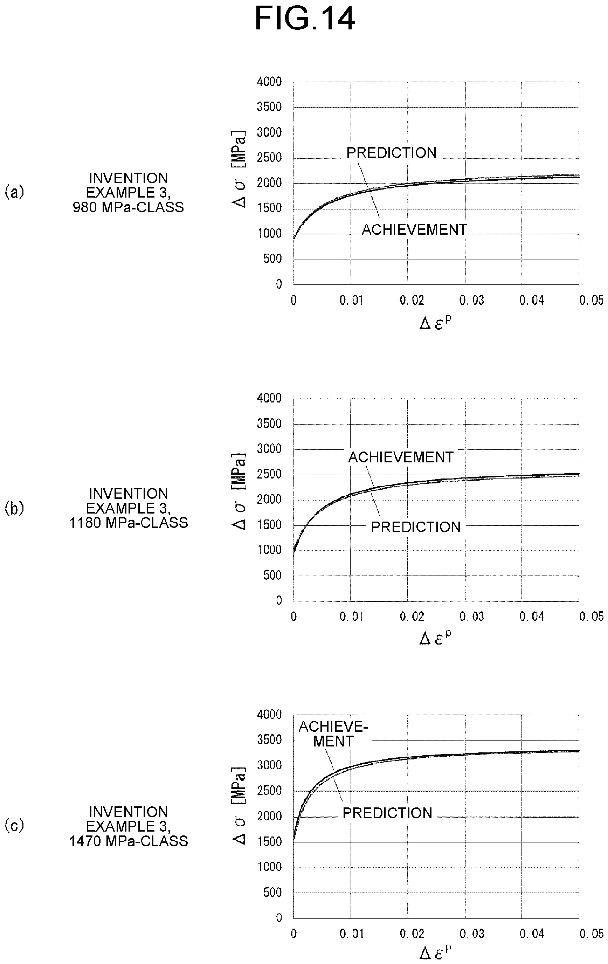

Next, prediction accuracies of the comparative example and the invention examples 1 to 3 will be described. FIG. 11 illustrates a result of predicting a compression behavior after re-yielding of a prediction high-tensile steel sheet by using the comparative example. A curve of "prediction" in FIG. 11 was obtained by predicting the model constants of Expression (1) by using the regression model of the comparative example for the above-mentioned prediction high-tensile steel sheet and substituting the predicted values $Y_e$, $A_e$, and $B_e$ into Expression (1). Furthermore, a curve of "achievement" was obtained by conducting a tension-compression test on the prediction high-tensile steel sheet and performing identification by using Expression (1) based on the obtained cyclic stress-strain curve. A closer distance between the curve of "prediction" and the curve of "achievement" indicates higher prediction accuracy. Similarly, FIGS. 12 to 14 illustrate results of predictions using the invention examples 1 to 3.

The prediction accuracies of the comparative example and the invention examples 1 to 3 were calculated as follows from the above-mentioned prediction results in FIGS. 11 to 14. In a "prediction" curve and an "achievement" curve in each graph of FIGS. 11 to 14, at each point of 0.001 pitches from 0 to 0.05 of a plastic strain change amount $\Delta\varepsilon^p$, a prediction accuracy was calculated by dividing the difference between a predicted value and an achievement value of $\Delta\sigma$ by the achievement value, multiplying the result by 100, and expressing the multiplied result in a percent value. An average value (ave) and a standard deviation score ($\sigma$) were calculated from pieces of data of prediction accuracies of 50 points for each of prediction high-tensile steel sheets of 980 MPa-class, 1180 MPa-class, and 1470 MPa-class, and the prediction accuracies were evaluated. Table 1 and FIG. 15 illustrate the results.

Table 1

| Legend | | Comparative example | Invention example 1 | Invention example 2 | Invention example 3 |
|---|---|---|---|---|---|
| Model | | Regression | NN | NN | NN |
| Explanatory variable (Input layer) | | Mechanical property value | SS curve (stress-strain curve) | SS curve Mechanical property value | SS curve Mechanical property value Steel grade (Grade) |
| Prediction accuracy | ave | 2.0% | 1.4% | -1.4% | -0.2% |
| | Room for improvement* | - | 31.2% | 30.5% | 88.9% |
| | $\sigma$ | 3.9% | 2.2% | 2.2% | 1.9% |
| | Room for improvement | - | 42.9% | 42.9% | 51.2% |

As illustrated in Table 1 and FIG. 15, average values (ave) of prediction accuracies in the invention examples 1 to 3 were improved by an average of 50.2% (31.2% in invention example 1, 30.5% in invention example 2, and 88.9% in invention example 3) as compared with that in the comparative example. Furthermore, the standard deviation scores ($\sigma$) of the prediction accuracies in the invention examples 1 to 3 were improved by an average of 45.7% (42.9% in invention example 1, 42.9% in invention example 2, and 51.2% in invention example 3). Effectiveness of the present invention was proven from the above.

Industrial Applicability

According to the present invention, it is possible to provide a method of predicting a tension-compression reverse loading behavior of a metal sheet capable of predicting a tension-compression reverse loading behavior of a metal sheet by determining a model constant of a material model expressing the tension-compression reverse loading behavior of the metal sheet based on a result of a simple test that does not need a special test method and jig.

**Claims**

1. A method of predicting a tension-compression reverse loading behavior of a metal sheet, the tension-compression reverse loading behavior being predicted by determining a model constant of a material model expressing the tension-compression reverse loading behavior of the metal sheet, the method comprising

a step of acquiring a value of the model constant of a prediction metal sheet by inputting metal materials test data, including a factor related to a uniaxial tension behavior, of the prediction metal sheet to a learned model that has been caused to perform machine learning using, as an input variable, metal materials test data and using, as an output variable, a value of the model constant, which has been determined based on a tension-compression test of the metal sheet, wherein the factor related to a uniaxial tension behavior includes point sequence data obtained by discretizing a stress-strain curve of uniaxial tensile test obtained from a uniaxial tensile test.

2. The method of predicting a tension-compression reverse loading behavior of a metal sheet, according to claim 1, wherein the factor related to a uniaxial tension behavior further includes a set of mechanical property values including yield stress, maximum tensile stress, and uniform elongation.

3. The method of predicting a tension-compression reverse loading behavior of a metal sheet, according to claim 1 or 2, wherein the metal materials test data further includes steel grade information.

4. The method of predicting a tension-compression reverse loading behavior of a metal sheet, according to any one of claims 1 to 3,

wherein a compressional behavior model of a steel material expressed in Expression (1) below is used as the material model, and
each of Y, A, and B in Expression (1) below is used as the model constant,

$$\Delta\sigma = Y + A\left(1 - \frac{1}{1 + B\Delta\varepsilon^{p}}\right) \quad \cdots \quad (1)$$

where $\Delta\sigma$ represents a stress change amount after re-yielding, and
$\Delta\varepsilon^{p}$ represents a plastic strain change amount after the re-yielding.

# FIG.1

(i)LEARNING PHASE

# FIG.2

**LEARNING DATA CREATION STEP**

**UNIAXIAL TENSILE TEST**

TRUE STRESS $\sigma$

$\sigma_{101}$
$\sigma_{100}$

UNIAXIAL TENSILE TEST RESULT (TRUE STRAIN-TRUE STRESS CURVE)

$\sigma_5$
$\sigma_4$
$\sigma_3$
$\sigma_2$
$\sigma_1$

$\varepsilon_1 \varepsilon_5$ ... $\varepsilon_{100} \varepsilon_{101}$

TRUE STRAIN $\varepsilon$

**STRESS-STRAIN CURVE OF UNIAXIAL TENSILE**

**TENSION-COMPRESSION APPLIED STRESS REVERSE TEST**
(TENSION-COMPRESSION TEST)

TRUE STRESS/MPa

1500
1000
500
0
-500
-1000
-1500

-0.04  -0.02  0  0.02  0.04

TRUE STRAIN

**CYCLIC STRESS-STRAIN CURVE**

**DISCRETIZATION PROCESSING**

DISCRETIZATION POINT SEQUENCE DATA
(TRUE STRAIN $\varepsilon$, TRUE STRESS $\sigma$)

$$\begin{pmatrix} (\varepsilon_1, \sigma_1) \\ (\varepsilon_2, \sigma_2) \\ \vdots \\ (\varepsilon_{101}, \sigma_{101}) \end{pmatrix}$$

⇨ INPUT VARIABLE (EXPLANATORY VARIABLE)

COMPRESSIONAL BEHAVIOR MODEL AFTER RE-YIELDING IDENTIFICATION OF MODEL CONSTANT OF EXPRESSION (1)

**COMPRESSIONAL BEHAVIOR MODEL AFTER RE-YIELDING**

$$\Delta\sigma = Y + A\left(1 - \frac{1}{1 + B\Delta\varepsilon^p}\right) \quad \cdots \text{ EXPRESSION (1)}$$

IDENTIFIED MODE CONSTANT Y
IDENTIFIED MODE CONSTANT A
IDENTIFIED MODE CONSTANT B

⇨ OUTPUT VARIABLE (OBJECTIVE VARIABLE)

$\Delta\sigma$ /MPa

3000
2500
2000
1500
1000
500
0

0  0.02  0.04  0.06

$\Delta\varepsilon^p$

— EXPERIMENTAL VALUE
— REGRESSION VALUE

**MACHINE LEARNING STEP**

INPUT DATA
DISCRETIZATION POINT SEQUENCE DATA
(TRUE STRAIN $\varepsilon$, TRUE STRESS $\sigma$)

$$\begin{pmatrix} (\varepsilon_1, \sigma_1) \\ (\varepsilon_2, \sigma_2) \\ \vdots \\ (\varepsilon_{101}, \sigma_{101}) \end{pmatrix}$$

GROUND TRUTH DATA

INPUT LAYER
INPUT 1
INPUT 2
⋮
INPUT 101

INTERMEDIATE LAYER 1
FIRST LAYER 1
FIRST LAYER 2
⋮
FIRST LAYER 50

INTERMEDIATE LAYER 2
SECOND LAYER 1
SECOND LAYER 2
⋮
SECOND LAYER 20

OUTPUT LAYER
MODEL CONSTANT Y
MODEL CONSTANT A
MODEL CONSTANT B

⇦ IDENTIFIED MODE CONSTANT Y
IDENTIFIED MODE CONSTANT A
IDENTIFIED MODE CONSTANT B

**LEARNED MODEL (NN)**

# FIG.3

TRUE STRESS $\sigma$

$\sigma_{101}$
$\sigma_{100}$
$\sigma_{99}$

$\sigma_5$
$\sigma_4$
$\sigma_3$
$\sigma_2$
$\sigma_1$

$\varepsilon_1$ $\varepsilon_5$ ... $\varepsilon_{99}$ $\varepsilon_{101}$
$\varepsilon_{100}$

TRUE STRAIN $\varepsilon$

DISCRETIZA-TION POINT SEQUENCE DATA  INPUT VARIABLE

$(\varepsilon_1, \sigma_1)$ ··· INPUT 1
$(\varepsilon_2, \sigma_2)$ ··· INPUT 2

$(\varepsilon_{101}, \sigma_{101})$ ··· INPUT 101

# FIG.4

| INPUT LAYER | INTERMEDIATE LAYER 1 | INTERMEDIATE LAYER 2 | OUTPUT LAYER |
|---|---|---|---|
| INPUT 1 | FIRST LAYER 1 | SECOND LAYER 1 | Y |
| INPUT 2 | FIRST LAYER 2 | SECOND LAYER 2 | A |
| INPUT 101 | FIRST LAYER 50 | SECOND LAYER 20 | B |

# FIG.5

**INPUT DATA CREATION STEP**

UNIAXIAL TENSILE TEST

TRUE STRESS $\sigma$

$\sigma_{101}$
$\sigma_{100}$

UNIAXIAL TENSILE TEST RESULT (TRUE STRAIN-TRUE STRESS CURVE)

$\sigma_5$
$\sigma_4$
$\sigma_3$
$\sigma_2$
$\sigma_1$

$\varepsilon_1 \varepsilon_5$ ... $\varepsilon_{100}$ $\varepsilon_{101}$

TRUE STRAIN $\varepsilon$

STRESS-STRAIN CURVE OF UNIAXIAL TENSILE

<TARGETED SHEET> METAL SHEET TO BE PREDICTED

DISCRETIZATION PROCESSING

DISCRETIZATION POINT SEQUENCE DATA
(TRUE STRAIN $\varepsilon$, TRUE STRESS $\sigma$)

$(\varepsilon_1, \sigma_1)$
$(\varepsilon_2, \sigma_2)$
$\vdots$
$(\varepsilon_{101}, \sigma_{101})$

INPUT VARIABLE (EXPLANATORY VARIABLE)

**TENSION-COMPRESSION REVERSE LOADING BEHAVIOR PREDICTION STEP**

INPUT DATA
DISCRETIZATION POINT SEQUENCE DATA
(TRUE STRAIN $\varepsilon$, TRUE STRESS $\sigma$)

$(\varepsilon_1, \sigma_1)$
$(\varepsilon_2, \sigma_2)$
$\vdots$
$(\varepsilon_{101}, \sigma_{101})$

INPUT LAYER

INPUT 1
INPUT 2
$\vdots$
INPUT 101

INTERMEDIATE LAYER 1

FIRST LAYER 1
FIRST LAYER 2
$\vdots$
FIRST LAYER 50

INTERMEDIATE LAYER 2

SECOND LAYER 1
SECOND LAYER 2
$\vdots$
SECOND LAYER 20

OUTPUT LAYER

MODEL CONSTANT Y
MODEL CONSTANT A
MODEL CONSTANT B

PREDICTED VALUE OF MODEL CONSTANT

MODEL CONSTANT Y PREDICTED VALUE: $Y_e$
MODEL CONSTANT A PREDICTED VALUE: $A_e$
MODEL CONSTANT B PREDICTED VALUE: $B_e$

LEARNED MODEL (NN)

$$\Delta\sigma = Y_e + A_e\left(1 - \frac{1}{1 + B_e \Delta\varepsilon^p}\right) \cdots \text{EXPRESSION (2)}$$

COMPRESSIONAL BEHAVIOR MODEL AFTER RE-YIELDING

# FIG.6

(i)LEARNING PHASE

STRESS-STRAIN CURVE OF UNIAXIAL TENSILE

MECHANICAL PROPERTY VALUES (YS, TS, AND u-EL)

MODEL CONSTANT OF MATERIAL MODEL EXPRESSING TENSION-COMPRESSION REVERSE LOADING BEHAVIOR

MACHINE LEARNING

LEARNED MODEL (NEURAL NETWORK)

(ii)RECOGNITION PHASE

STRESS-STRAIN CURVE OF UNIAXIAL TENSILE

MECHANICAL PROPERTY VALUES (YS, TS, AND u-EL)

IN-PUT

LEARNED MODEL (NEURAL NETWORK)

OUT-PUT

MODEL CONSTANT OF MATERIAL MODEL EXPRESSING TENSION-COMPRESSION REVERSE LOADING BEHAVIOR

Y, A, B

FEM CALCULATION

# FIG.7

INPUT LAYER

INPUT 1
INPUT 2
·
·
·
INPUT 101

YS
TS
u-EL

INTERMEDIATE LAYER 1

FIRST LAYER 1
FIRST LAYER 2
·
·
·
FIRST LAYER 50

INTERMEDIATE LAYER 2

SECOND LAYER 1
SECOND LAYER 2
·
·
·
SECOND LAYER 20

OUTPUT LAYER

Y
A
B

# FIG.8

(i)LEARNING PHASE

(ii)RECOGNITION PHASE

# FIG.9

# FIG.10

(a)

(b)

(c)

# FIG.11

(a) COMPARATIVE EXAMPLE, 980 MPa-CLASS

(b) COMPARATIVE EXAMPLE, 1180 MPa-CLASS

(c) COMPARATIVE EXAMPLE, 1470 MPa-CLASS

# FIG.12

(a) INVENTION EXAMPLE 1, 980 MPa-CLASS

(b) INVENTION EXAMPLE 1, 1180 MPa-CLASS

(c) INVENTION EXAMPLE 1, 1470 MPa-CLASS

# FIG.13

(a)　INVENTION EXAMPLE 2, 980 MPa-CLASS

(b)　INVENTION EXAMPLE 2, 1180 MPa-CLASS

(c)　INVENTION EXAMPLE 2, 1470 MPa-CLASS

# FIG.14

(a) INVENTION EXAMPLE 3, 980 MPa-CLASS

(b) INVENTION EXAMPLE 3, 1180 MPa-CLASS

(c) INVENTION EXAMPLE 3, 1470 MPa-CLASS

# FIG.15

# FIG.16

# FIG.17

# FIG.18

# FIG.19

(a)

(b)

(c)

<table>
<tr><td colspan="2">**INTERNATIONAL SEARCH REPORT**</td><td colspan="2">International application No.<br>**PCT/JP2022/021879**</td></tr>
</table>

**A.     CLASSIFICATION OF SUBJECT MATTER**

**B21D 22/00**(2006.01)i; **G01N 3/00**(2006.01)i; **G01N 3/08**(2006.01)i
FI:     G01N3/00 Z; G01N3/08; B21D22/00

According to International Patent Classification (IPC) or to both national classification and IPC

**B.     FIELDS SEARCHED**

Minimum documentation searched (classification system followed by classification symbols)

B21D22/00; G01N3/00; G01N3/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C.     DOCUMENTS CONSIDERED TO BE RELEVANT**

| Category* | Citation of document, with indication, where appropriate, of the relevant passages | Relevant to claim No. |
|---|---|---|
| A | JP 2013-054001 A (JFE STEEL CORP.) 21 March 2013 (2013-03-21)<br>    paragraphs [0019]-[0038] | 1-4 |
| A | JP 2000-275154 A (TOYOTA MOTOR CORP.) 06 October 2000 (2000-10-06)<br>    paragraphs [0012]-[0143] | 1-4 |
| A | WO 2014/141794 A1 (JFE STEEL CORP.) 18 September 2014 (2014-09-18)<br>    entire text, all drawings | 1-4 |
| A | JP 2005-315703 A (NIPPON STEEL CORP.) 10 November 2005 (2005-11-10)<br>    entire text, all drawings | 1-4 |
| A | WO 2015/170742 A1 (NIPPON STEEL & SUMITOMO METAL CORP.) 12 November 2015<br>(2015-11-12)<br>    entire text, all drawings | 1-4 |
| A | CN 111339703 A (INST METAL RESEARCH CAS) 26 June 2020 (2020-06-26)<br>    entire text, all drawings | 1-4 |

☑ Further documents are listed in the continuation of Box C.          ☑ See patent family annex.

| | |
|---|---|
| *     Special categories of cited documents:<br>"A"   document defining the general state of the art which is not considered<br>        to be of particular relevance<br>"E"   earlier application or patent but published on or after the international<br>        filing date<br>"L"   document which may throw doubts on priority claim(s) or which is<br>        cited to establish the publication date of another citation or other<br>        special reason (as specified)<br>"O"   document referring to an oral disclosure, use, exhibition or other<br>        means<br>"P"   document published prior to the international filing date but later than<br>        the priority date claimed | "T"   later document published after the international filing date or priority<br>        date and not in conflict with the application but cited to understand the<br>        principle or theory underlying the invention<br>"X"   document of particular relevance; the claimed invention cannot be<br>        considered novel or cannot be considered to involve an inventive step<br>        when the document is taken alone<br>"Y"   document of particular relevance; the claimed invention cannot be<br>        considered to involve an inventive step when the document is<br>        combined with one or more other such documents, such combination<br>        being obvious to a person skilled in the art<br>"&"   document member of the same patent family |

| Date of the actual completion of the international search | Date of mailing of the international search report |
|---|---|
| **29 July 2022** | **09 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/021879**

| C. | DOCUMENTS CONSIDERED TO BE RELEVANT | |
|---|---|---|
| Category* | Citation of document, with indication, where appropriate, of the relevant passages | Relevant to claim No. |
| A | 桑原利彦. 軽金属板材の塑性変形特性ー測定とモデル化の手法ー. 軽金属. 2015, vol. 65, no. 5, pp. 164-173, (KUWABARA, Toshihiko, YOSHIDA, Kengo. Plastic deformation characteristics of light metal sheets —methods of measurement and modeling—. Journal of Japan Institute of Light Metals.) <br> entire text, all drawings | 1-4 |
| A | Jianping Lin, Effect of constitutive model on springback prediction of MP980 and AA6022-T4, International Journal of Material Forming, 14 January 2019, https://doi.org/10.1007/s12289-018-01468-x <br> entire text, all drawings | 1-4 |

INTERNATIONAL SEARCH REPORT
Information on patent family members

International application No.

**PCT/JP2022/021879**

| Patent document cited in search report | | | Publication date (day/month/year) | Patent family member(s) | | | Publication date (day/month/year) |
|---|---|---|---|---|---|---|---|
| JP | 2013-054001 | A | 21 March 2013 | (Family: none) | | | |
| JP | 2000-275154 | A | 06 October 2000 | (Family: none) | | | |
| WO | 2014/141794 | A1 | 18 September 2014 | US | 2015/0370936 | A1 | |
| | | | | entire text, all drawings | | | |
| | | | | EP | 2975377 | A1 | |
| | | | | KR | 10-2015-0110780 | A | |
| | | | | CN | 105122033 | A | |
| | | | | MX | 2015012272 | A | |
| JP | 2005-315703 | A | 10 November 2005 | (Family: none) | | | |
| WO | 2015/170742 | A1 | 12 November 2015 | US | 2017/0191915 | A1 | |
| | | | | entire text, all drawings | | | |
| | | | | KR | 10-2016-0138275 | A | |
| | | | | CN | 106461522 | A | |
| CN | 111339703 | A | 26 June 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5991055 B
- JP 5991278 B
- JP 6015997 B
- JP 5582211 B

**Non-patent literature cited in the description**

- **F. YOSHIDA ; T. UEMORI.** *Int. J. Plasticity,* 2002, vol. 18, 661-686
- *The journal of the Iron and Steel Institute of Japan,* 1984, vol. 70 (11), 1551-1558